# EUROPÄISCHE PATENTSCHRIFT

(11) **EP 0 919 116 B1**
(45) Veröffentlichungstag und Bekanntmachung des Hinweises auf die Patenterteilung: **17.09.2003**
(21) Anmeldenummer: 98121052.9
(22) Anmeldetag: 06.11.1998
(51) Int. Cl.: A01D 17/10, B65G 15/52, B65G 17/06

(54) **Umlaufender Förderer für landwirtschaftliche Maschinen**
Running conveyor for agricultural machinery
Transporteur à mouvement pour des machines agricoles

(30) Priorität: 01.07.1998 DE 19829386; 19.11.1997 DE 19751245
(43) Veröffentlichungstag der Anmeldung: 02.06.1999
(73) Patentinhaber: ARTEMIS Kautschuk- und Kunststofftechnik GmbH & Cie, D-30559 Hannover (DE)
(72) Erfinder: Tjabringa, Heiko, 9628 CM Siddeburen (NL)
(74) Vertreter: Depmeyer, Jochen

(56) Entgegenhaltungen:
- DE-A- 3 309 281
- FR-A- 945 112
- GB-A- 1 200 324
- US-A- 1 975 668
- US-A- 2 309 155

## Beschreibung

Die Erfindung betrifft einen umlaufenden Förderer für Knollenfrüchte, insb. Kartoffeln, für landwirtschaftliche Maschinen, mit zwei oder mehreren, einander parallelen, zugfesten, biegsamen, in Förderrichtung verlaufenden, mit gegenseitigem Abstand angeordneten Bändern zur Befestigung von mit gegenseitigem Abstand angeordneten, quer zu den Bändern verlaufenden, vorspringenden, zur Mitnahme des Fördergutes geeigneten Mitnehmern, wobei zwischen den Mitnehmern eine Auflage für das Fördergut vorgesehen ist, die von einem Netz gebildet ist, das im Winkel zueinander verlaufende, biegsame Elemente aufweist.

Aus der EP-A-0 919 117, die zum Stand der Technik gemäß Artikel 54(3) EPÜ gehört, ist ein solcher Förderer bekannt.

Bei bekannten Förderern wird die Auflage von einem durchgehenden Kunststoffband gebildet, das somit zur Aufnahme des Fördergutes dient. Es sind darüber hinaus auch Netze als Auflage für das Fördergut bekannt (z.B. US 1 975 668 A).

Ein Förderer der eingangs genannten Art ist aus der DE 33 09281A bekannt. Die Mitnehmer weisen dabei quer zu den Bändern angeordnete Stäbe auf, die in der Weise vorspringend ausgebildet sind, dass in der Art eines Rechens an den Stäben eine Vielzahl von in einer Reihe senkrecht abstehenden Zinken angebracht ist. Die Zinken der Mitnehmer greifen dabei durch die Maschen des Netzes hindurch. Die Mitnehmer sind somit nicht fest mit dem Netz verbunden.

Ferner ist aus der FR 945 112 ein Förderer für Kartoffeln und dgl. bekannt mit in Förderrichtung verlaufenden Zuggliedern, daran befestigten, quer verlaufenden Stäben und einem Netz, wobei das Netz so um die Stäbe herumgeführt ist, das es zwischen ihnen nach unten durchhängt und auf diese Weise Taschen zum Aufnehmen des zu fördernden Gutes ausbildet. In diesen Taschen sammelt sich das Fördergut in Haufen, sodass der Nachteil besteht, dass Fremdgut wie Erdreich oder Steine mitgeschleppt wird.

Gegenüber diesen bekannten Förderern möchte die Erfindung eine weitere Gewichtsreduzierung und ferner erreichen, dass Fremdgut z. B. Erdreich und Steine den Förderer verlassen können und somit eine gewisse Siebung stattfinden kann.

Diese Aufgabe wird erfindungsgemäß dadurch gelöst, dass die Elemente des Netzes an ihren Kreuzungsstellen schubfest miteinander verbunden sind und das Netz durch Doppelung um die Mitnehmer herumgeführt ist, wobei die beiden von der Doppelung gebildeten Abschnitte durch ein Verbindungselement miteinander verbunden sind. Somit ist eine ausreichende Tragfähigkeit für Kartoffeln und dgl. gegeben, darüber hinaus aber sichergestellt, dass unerwünschte Fremdkörper oder Früchte mit Untermaß durch das Netz hindurch fallen können. Es versteht sich, dass eine solche Auflage vergleichsweise leicht ist, um so zu einer Gewichtsreduzierung des Förderers beitragen zu können.

Aufgrund der Doppelung und der durch die Doppelung entstehenden Abschnitte ist das Netz gut an den Mitnehmern befestigt. Zusätzlich kann das Netz durch Klammern, hindurchgeführte Halterungen oder dergl. an dem Mitnehmer fixiert werden.

Zwischen benachbarten, vorspringenden Mitnehmern kann das Netz von weiteren, nicht vorspringenden Stäben unterfangen sein, die quer zu den seitlichen Bändern verlaufen und mit ihren Enden an den Bändern befestigt sind. Es ist aber auch möglich, das Netz zwischen den Mitnehmern nur stellenweise zu unterstützen, also stellenweise durchhängen zu lassen, ggfs. sogar unter Verzicht auf Unterstützungsstellen über den gesamten Abstand zwischen den vorspringenden Mitnehmern hinweg frei durchhängen zu lassen, wobei es also nur an diesen Mitnehmern befestigt ist.

Es ist zweckmäßig, wenn die Maschenweite etwa 1 - 5 cm, vorzugsweise aber 1 - 3 cm beträgt. Quer verlaufende, das Netz unterstützende, steife Stäbe können dabei einen gegenseitigen Abstand etwa 8 - 12 cm aufweisen. Demgemäss soll also die lichte Maschenweite wesentlich kleiner sein als der Stababstand.

Weitere Einzelheiten der Erfindung werden anhand der Zeichnung erläutert, in der Ausführungsbeispiele der Erfindung dargestellt sind. Es zeigen
Fig. 1 eine Teildraufsicht auf ein umlaufendes Band für einen Steilförderer von Kartoffelerntemaschinen,
Fig. 2 einen Schnitt nach der Linie II - II von Fig. 1,
Fig. 3 einen Teilschnitt nach der Linie III - III von Fig. 1 und
Fig. 4 eine Teildraufsicht - der Darstellung gemäss Fig. 1 entsprechend - in vergrößertem Maßstab.

Zu beiden Seiten eines in Richtung des Pfeiles a umlaufenden Steilförderers befindet sich ein endlos gemachtes zugfestes, biegsames, meist aus gummiertem Gewebe bestehendes Band 1 mit flach rechteckigem Querschnitt. Es dient zur Befestigung von Stäben 2, die quer zur Förderrichtung a angeordnet und mit ihren meist abgeflachten Enden 3 oben auf den Bändern 1 aufliegend dort durch Nieten 4 od. dgl. fest verankert sind. Im Abstand von mehreren Teilungsabständen befinden sich nach oben vorspringende Mitnehmer 5, die nicht allein aus einem Stab 2, sondern zusätzlich noch aus einem oben aufliegenden, fest verankerten Bügel 6 mit Zwischenstab 7 bestehen. Diese Festigkeitsträger für die Mitnehmer 5 können noch zusätzliche Stützen od. dgl. aufweisen, die die Kippsicherheit der Mitnehmer 5 erhöhen und an sich beliebig ausgeführt sein können.

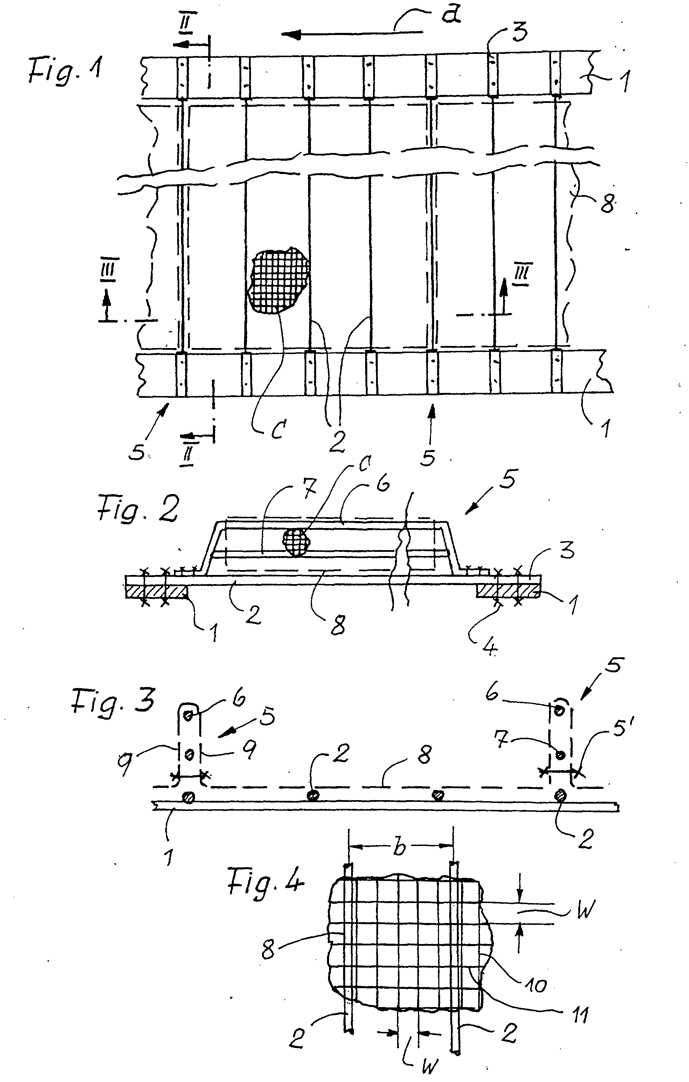

Der gegenseitige Abstand b der Stäbe 2 beträgt etwa 80 - 120 mm. Um bei einem so grossen, ggfs. noch grösseren Abstand b Knollenfrüchte, insb. Kartoffeln sicher fördern zu können und ausserdem das Gewicht des eigentlichen Förderers möglichst gering zu halten, sind die Stäbe 2 über die Bandlänge hinweg mit einem Netz 8 überdeckt, das aus Gründen der einfacheren Darstellung in Fig. 1 und 2 bei c nur teilweise wiedergegeben ist und an sich beliebigen Stellen z.B durch Klammern, Verklemmungen, Haken und dgl. derart mit dem Förderband verbunden sein muss, dass es sich während des Betriebes nicht verschieben oder gar ablösen kann. Wie zudem aus den Fig. 1 - 3 erkennbar ist, überdeckt das Netz 8 die Abstände zwischen benachbarten Stäben 2; damit bildet das Netz das aktive, das Fördergut aufnehmende Element des Förderers.

Im Bereich der Mitnehmer 5 ist das Netz 8 um die Elemente 6, 7 herumgeführt, also gedoppelt und im Fussbereich der Mitnehmer 5 durch eine Verschraubung 5' od. dgl. zusammengehalten, indem die vor und hinter den Elementen 6, 7 befindlichen Abschnitte 9 des Netzes 8 verbunden werden.

Die das Netz 8 bildenden zugfesten Fäden oder Seile 10, 11 verlaufen im rechten Winkel zueinander, sind schubfest miteinander verbunden und verlaufen in Richtung des Pfeiles a bzw. quer hierzu, wenngleich auch bei weniger beanspruchten Förderern die Elemente 11, 10 unter einem Winkel, vorzugsweise unter etwa 45° zur Förderrichtung verlaufen können, um so eine gewisse Elastizität des Netzes 8 zu erzielen. Wichtig ist noch, dass bei quadratischen Maschen des Netzes 8 deren Maschenweite mehrfach geringer ist als der Abstand b; vorgesehen sind dabei Maschenweiten W von etwa 1 - 3 cm.

Die Elemente 10, 11 werden vorzugsweise als Textilelemente in Form von Fäden oder Seilchen oder als kunsttoffumspritzte metallische Drähte ausgeführt, um das Erntegut zu schützen.

Es sei noch erwähnt, dass der gegenseitige Abstand der Mitnehmer 5 etwa 30 - 60 cm und deren Höhe etwa 60 - 180 mm betragen.

Wie bereits angedeutet, ermöglicht die Erfindung mit der Netzabdeckung einen vergrösserten gegenseitigen Abstand der Stäbe 2 zwischen den Mitnehmern 5.

Es sei erwähnt, dass die Elemente 10 des Netzes 8 auch versteift ausgeführt werden können, und zwar so, dass sie die Stäbe 2 ersetzen können, wobei dann zweckmässigerweise zwischen zwei versteiften Elementen 10 biegsame Elemente 10 angeordnet werden, um die Elastizität des Netzes 8 nicht zu gefährden.

Die Randbefestigung des Netzes 8 kann so erfolgen, daß das Netz 8 mit seinen seitlichen Rändern auf den Bändern 1 aufliegt und im übrigen im Bereich der Stäbe 2 zwischen den Enden 3 und dem zugehörigen Band 1 eingeklemmt ist. Jedoch können die Netze 8 zwischen den Enden 3 noch befestigt sein z.B. durch Krampen und dgl.

Die Erfindung schließt eine Randverstärkung des Netzes 8 insb. im Bereich der Bänder 1 nicht aus. Dort können Doppelungen, Säume, Einfassungen od. dgl vorgesehen sein.
Diese Massnahmen versteifen jedoch das Netz 8 nur an seinen Rändern, während es hierzwischen die geforderte Weichheit und Verformbarkeit behält. Die Biegeweichheit wird also im Mittelbereich der Netze 8 nicht beeinträchtigt. Diese Randverstärkung kann derart ausgeführt sein, dass durch die Netzränder die umlaufenden Bänder 1 ganz oder teilweise ersetzt werden können.

Der erfindungsgemäss Förderer kann für alle knollenartigen Früchte so z.B auch für Tomaten, Zwiebeln oder bestimmte, ähnlich geformte Gemüsearten benutzt, insg. gesehen also für alle Ernteerzeugnisse dieser Art verwendet werden, die gefördert, dabei geschont und zudem aussortiert werden müssen.

Es sei darauf hingewiesen, dass das Netz 8 im Bereich zwischen den seitlichen Bändern 1 auf den Stäben 2 aufliegen kann. Bei dieser Ausführung müssen die Stäbe 2 durch das Netz 8 hindurchgeführt sein, weil sie einmal oberhalb und einmal unterhalb des Netzes 8 angeordnet sind, um so die Tragfähigkeit zu erhöhen.

Zwischen den beiden bzw. seitlich angeordneten Bändern 1 evtl. auch auf den Bändern 1 können die Stäbe 2 auch nach Art eines vollgewebes (mit Schuss und Kette) wechselseitig oberhalb und unterhalb des Netzes 8 verlegt sein, wobei dann die Elemente 11 teilweise oberhalb und teilweise unterhalb der Stäbe 2 angeordnet wären. Dadurch entsteht eine gute Bindung zwischen dem Netz 8 und den Stäben 2.

## Patentansprüche

1. Umlaufender Förderer für Knollenfrüchte, insb. Kartoffeln, für landwirtschaftliche Maschinen, mit zwei oder mehreren, einander parallelen, zugfesten, biegsamen, in Förderrichtung verlaufenden, mit gegenseitigem Abstand angeordneten Bändern zur Befestigung von mit gegenseitigem Abstand angeordneten, quer zu den Bändern verlaufenden, vorspringenden, zur Mitnahme des Fördergutes geeigneten Mitnehmern, wobei zwischen den Mitnehmern eine Auflage für das Fördergut vorgesehen ist, die von einem Netz (8) gebildet ist, das im Winkel zueinander verlaufende, biegsame Elemente (10, 11) aufweist, wobei die Elemente (10, 11) des Netzes (8) an ihren Kreuzungsstellen schubfest miteinander verbunden sind und wobei das Netz durch Doppelung um die Mitnehmer herumgeführt ist, wobei die beiden von der Doppelung gebildeten Abschnitte (9) durch ein Verbindungselement miteinander verbunden sind.

2. Förderer nach Anspruch 1, **dadurch gekennzeichnet, dass** die Verbindung im Fußbereich der Mitnehmer (5) durch eine Verschraubung (5') erfolgt.

3. Förderer nach Anspruch 1, **dadurch gekennzeichnet, dass** die lichte Netzweite oder Maschenweite w der praktisch quadratischen Netzdurchbrechungen mehrfach kleiner ist als der Abstand (b) der zur Unterstützung des Netzes (8) zwischen den Mitnehmern (5) dienenden Stäbe (2), deren Enden an den Bändern (1) befestigt sind und deren gegenseitiger Abstand vorzugsweise etwa 8 - 12 cm beträgt.

4. Förderer nach Anspruch 3, **dadurch gekennzeichnet, dass** die Netzweite etwa 1 - 5 cm, vorzugsweise etwa 2 - 3 cm, beträgt.

5. Förderer nach Anspruch 1, **dadurch gekennzeichnet, dass** die fadenförmigen Elemente (11) des Netzes (8) in Förderbandlängsrichtung und andere Elemente (10) des Netzes quer dazu verlaufen.

6. Förderer nach Anspruch 1, **dadurch gekennzeichnet, dass** bei etwa quadratischen Netzdurchbrechungen die das Netz (8) bildenden Elemente (10, 11) etwa unter 45° zur Förderbandlängsrichtung verlaufen.

7. Förderer nach Anspruch 1, **dadurch gekennzeichnet, dass** die das Netz (8) bildenden Elemente als Textilfäden oder kunststoffumspritzte metallische Drähte oder Seile ausgeführt sind.

8. Förderer nach Anspruch 1, **dadurch gekennzeichnet, dass** die Mitnehmer (5) einen an seinen Schenkeln verankerten Bügel (6) aufweisen, der unterhalb seines parallel zur Bandebene verlaufenden Steges ein oder mehrere Zwischenstäbe (7) parallel zum Steg verlaufend aufweist.

9. Förderer nach Anspruch 1, **dadurch gekennzeichnet, dass** der zwischen benachbarten Mitnehmern (5) befindliche Abschnitt des Netzes (8) zumindest stellenweise unterstützungsfrei durchhängt.

10. Förderer nach Anspruch 1, **dadurch gekennzeichnet, dass** das Netz (8) lediglich an den Mitnehmern (5) befestigt ist und zwischen den Mitnehmern durchhängt.

11. Förderer nach Anspruch 1, **dadurch gekennzeichnet, dass** das Netz (8) lediglich an den Mitnehmern (5) befestigt ist und zwischen den Mitnehmer lediglich aufliegt.

12. Förderer nach Anspruch 1, **dadurch gekennzeichnet, dass** die quer zum Förderer sich erstreckenden Elemente (10) des Netzes (8) versteift und ganz oder zum Teil anstelle der Stäbe (2) vorgesehen sind.

13. Förderer nach einem oder mehreren vorhergehenden Ansprüchen, **dadurch gekennzeichnet, dass** die im Bereich der in Förderrichtung umlaufenden Bänder (1) befindlichen Netzränder versteift sind, und zwar durch Doppelung, Umsäumung, Einfassungen od. dgl..

14. Förderer nach einem oder mehreren vorhergehenden Ansprüchen, **dadurch gekennzeichnet, dass** die Netzränder zwischen den Enden (3) der Stäbe (2) und den in Förderrichtung umlaufenden Bändern (1) eingeklemmt sind.

15. Förderer nach einem oder mehreren vorhergehenden Ansprüchen, **dadurch gekennzeichnet, dass** die Netzränder mit den in Förderrichtung umlaufenden Bändern (1) z.B. durch Krampen verbunden sind.

16. Förderer nach Anspruch 13 und 14, **dadurch gekennzeichnet, dass** die versteiften Netzränder derart verstärkt sind, dass sie zumindest stellenweise anstelle der in Förderrichtung umlaufenden Bänder (1) verwendbar sind.

17. Förderer nach Anspruch 15, **dadurch gekennzeichnet, dass** zwischen den Bändern (1) Elemente (11) des Netzes (8) oberhalb der Stäbe angeordnet sind.

18. Förderer nach einem oder mehreren vorhergehenden Ansprüchen, **dadurch gekennzeichnet, dass** im Winkel zu den Stäben (2) verlaufende Elemente (11) des Netzes (8) wechselseitig in Bezug auf die Stäbe (2) angeordnet sind, sodass einige Elemente (11) unterhalb und die anderen Elemente (11) oberhalb des Stabes (2) sich befinden.

## Claims

1. Circulatory conveyor for tuberous crops, more esp. potatoes, for agricultural machines, said conveyor having two or more substantially inextensible, flexible belts, which are parallel to each other, extend in the direction of conveyance and are disposed at mutual spacings from each other, for securing protruding entrainment means, which are disposed at mutual spacings from each other, extend transversely relative to the belts and are suitable for entraining the goods to be conveyed, a support for the goods to be conveyed being provided between the entrainment means and being formed by a web (8), which has flexible elements (10, 11), which extend at an angle relative to each other, wherein the elements (10, 11) of the web (8) are interconnected in a shear-resistant manner at their points of intersection, and wherein the web is guided around the entrainment means by doubling, wherein the two portions (9), formed by the doubling, are interconnected by means of a connecting element.

2. Conveyor according to claim 1, **characterised in that** the connection is effected in the base region of the entrainment means (5) by a screw-connection (5').

3. Conveyor according to claim 1, **characterised in that** the internal web width or mesh width w of the virtually square web openings is many times smaller than the spacing (b) of the rods (2), which serve to support the web (8) between the entrainment means (5), the ends of said rods being mounted on the belts (1), and the mutual spacing between said rods being preferably substantially 8 - 12 cm.

4. Conveyor according to claim 3, **characterised in that** the web width is substantially 1 - 5 cm, preferably substantially 2 - 3 cm.

5. Conveyor according to claim 1, **characterised in that** the filament-like elements (11) of the web (8) extend in the longitudinal direction of the conveyor belt, and other elements (10) of the web extend transversely thereto.

6. Conveyor according to claim 1, **characterised in that**, if the web openings are substantially square, the elements (10, 11) forming the web (8) extend substantially at 45° relative to the longitudinal direction of the conveyor belt.

7. Conveyor according to claim 1, **characterised in that** the elements forming the web (8) are in the form of textile filaments or plastics-material-injection-moulded, metallic wires or cables.

8. Conveyor according to claim 1, **characterised in that** the entrainment means (5) include a clamp (6), which is secured at its legs and has, beneath its bracket extending parallel to the belt plane, one or more intermediate rods (7) extending parallel to the web.

9. Conveyor according to claim 1, **characterised in that** the portion of the web (8), situated between adjacent entrainment means (5), sags at least at various locations without a support.

10. Conveyor according to claim 1, **characterised in that** the web (8) is merely mounted on the entrainment means (5) and sags between the entrainment means.

11. Conveyor according to claim 1, **characterised in that** the web (8) is mounted merely on the entrainment means (5) and merely rests between the entrainment means.

12. Conveyor according to claim 1, **characterised in that** the elements (10) of the web (8) extending transversely relative to the conveyor are reinforced and wholly or partially provided instead of the rods (2).

13. Conveyor according to one or more of the preceding claims, **characterised in that** the web edges, situated in the region of the belts (1) which rotate in the direction of conveyance, are reinforced, that is to say by doubling, bordering, enclosures, or the like.

14. Conveyor according to one or more of the preceding claims, **characterised in that** the web edges are clamped in position between the ends (3) of the rods (2) and the belts (1) which rotate in the direction of conveyance.

15. Conveyor according to one or more of the preceding claims, **characterised in that** the web edges are connected to the belts (1), which rotate in the direction of conveyance, e.g. by clips.

16. Conveyor according to claims 13 and 14, **characterised in that** the reinforced web edges are strengthened in such a manner that they can be used at least at various locations instead of the belts (1) which rotate in the direction of conveyance.

17. Conveyor according to claim 15, **characterised in that** elements (11) of the web (8) are disposed above the rods between the belts (1).

18. Conveyor according to one or more of the preceding claims, **characterised in that** elements (11) of the web (8) extending at an angle relative to the rods (2) are alternately disposed with respect to the rods (2), so that some elements (11) are situated beneath the rod (2), and the other elements (11) are situated above said rod.

## Revendications

1. Convoyeur sans fin de tubercules, notamment de pommes de terre, pour des machines agricoles, comprenant deux ou plusieurs bandes parallèles, résistant à la traction, souples, s'étendant dans la direction de transport, disposées à distance mutuelle et destinées à la fixation d'entraîneurs, disposés à distance mutuelle, s'étendant transversalement aux bandes, en saillie et propres à entraîner le produit transporté et il est prévu entre les entraîneurs, pour le produit transporté, un support qui est formé d'un filet (8), qui a des éléments (10, 11) souples s'étendant en faisant un angle les uns par rapport aux autres, les éléments (10, 11) du filet (8) étant reliés entre eux d'une manière résistante au cisaillement en leurs points d'intersection et le filet passant par doublement autour des entraîneurs, les deux tronçons (9) formés par le doublement étant reliés entre eux par un élément de liaison.

2. Convoyeur suivant la revendication 1, **caractérisé en ce que** la liaison a lieu dans la partie de pied des entraîneurs (5) par un vissage (5').

3. Convoyeur suivant la revendication 1, **caractérisé en ce que** la dimension w de maille des ouvertures du filet pratiquement carrées est plusieurs fois plus petite que la distance (b) entre les barreaux (2) qui servent à soutenir le filet (8) entre les entraîneurs (5), dont les extrémités sont fixées aux bandes (1) et qui se trouvent à une distance mutuelle, de préférence d'environ 8 à 12 cm.

4. Convoyeur suivant la revendication 3, **caractérisé en ce que** la maille du filet est d'environ 1 à 5 cm, de préférence d'environ 2 à 3 cm.

5. Convoyeur suivant la revendication 1, **caractérisé en ce que** les éléments (11) filiformes du filet (8) s'étendent dans la direction longitudinale de la bande du convoyeur et d'autres éléments (10) du filet transversalement à cette direction.

6. Convoyeur suivant la revendication 1, **caractérisé en ce que**, pour des ouvertures du filet à peu près carrées, les éléments (10, 11) formant le filet (8) s'étendent à peu près à 45° par rapport à la direction longitudinale de la bande du convoyeur.

7. Convoyeur suivant la revendication 1, **caractérisé en ce que** les éléments formant le filet (8) sont réalisés sous la forme de fils textiles ou de fils métalliques ou de câbles entourés de matière plastique par extrusion.

8. Convoyeur suivant la revendication 1, **caractérisé en ce que** les entraîneurs (5) comportent un étrier (6) qui est arrimé par ses branches et qui a, en-dessous de son âme s'étendant parallèlement aux flancs de la bande, un ou plusieurs barreaux (7) intermédiaire(s) s'étendant parallèlement à l'âme.

9. Convoyeur suivant la revendication 1, **caractérisé en ce que** le tronçon, s'étendant entre des entraîneurs (5) voisins, du filet (8) pend au moins par endroits sans être soutenu.

10. Convoyeur suivant la revendication 1, **caractérisé en ce que** le filet (8) est fixé seulement sur les entraîneurs (5) et pend entre les entraîneurs.

11. Convoyeur suivant la revendication 1, **caractérisé en ce que** le filet (8) est fixé seulement aux entraîneurs (5) et est appliqué seulement entre les entraîneurs.

12. Convoyeur suivant la revendication 1, **caractérisé en ce que** les éléments (10) du filet (8) qui s'étendent transversalement au convoyeur sont rigidifiés et sont prévus en tout ou partie à la place des barreaux (2).

13. Convoyeur suivant l'une ou plusieurs des revendications précédentes, **caractérisé en ce que** les bord du filet, se trouvant dans la région des bandes (1) tournant sans fin dans la direction du convoyeur, sont rigidifiés et cela par doublement, par ourlet, par des encadrements ou analogues.

14. Convoyeur suivant l'une ou plusieurs des revendications précédentes, **caractérisé en ce que** les bords du filet sont serrés entre les extrémités (3) des barreaux (2) et les bandes (1) tournant sans fin dans la direction du convoyeur.

15. Convoyeur suivant l'une ou plusieurs des revendications précédentes, **caractérisé en ce que** les bords du filet sont reliés, par exemple par des crampons, aux bandes (1) tournant sans fin dans la direction du convoyeur.

16. Convoyeur suivant la revendication 13 et 14, **caractérisé en ce que** les bords rigidifiés du filet sont renforcés, de manière à pouvoir être utilisés, au moins par endroit, au lieu des bandes (1) tournant sans fin dans la direction du convoyeur.

17. Convoyeur suivant la revendication 15, **caractérisé en ce que** des éléments (11) du filet (8) sont disposés entre les bandes (1) au-dessus des barreaux.

18. Convoyeur suivant l'une ou plusieurs des revendications précédentes, **caractérisé en ce que** des éléments (11) du filet (8) s'étendant en faisant un angle avec les barreaux (2) sont disposés en alternance par rapport aux barreaux (2), de sorte que certains éléments (11) se trouvent en-dessous et que les autres éléments (11) se trouvent au-dessus du barreau (2).
